# EUROPÄISCHE PATENTSCHRIFT

(11) **EP 3 926 021 B1**
(45) Veröffentlichungstag und Bekanntmachung des Hinweises auf die Patenterteilung: **04.09.2024**
(21) Anmeldenummer: 21178949.0
(22) Anmeldetag: 11.06.2021
(51) Int. Cl.: C09K 5/04, F25B 7/00, F25B 40/00, F25B 41/20, F25B 41/30, F25B 41/40, F25B 49/02

(54) **KÄLTEMITTEL**
COOLANT
RÉFRIGÉRANT

(30) Priorität: 17.06.2020 DE 102020116012
(43) Veröffentlichungstag der Anmeldung: 22.12.2021
(73) Patentinhaber: Weiss Technik GmbH, 35447 Reiskirchen (DE)
(72) Erfinder: HAACK, Christian, 35037 Marburg (DE); ZAHRT, Yannik, 35466 Rabenau (DE)
(74) Vertreter: advotec.

(56) Entgegenhaltungen:
- EP-A1- 0 770 113
- WO-A1-2017/157864
- WO-A1-2020/035689

## Beschreibung

Die Erfindung betrifft ein Kältemittel für eine Kühleinrichtung sowie eine Prüfkammer mit dem Kältemittel sowie eine Verwendung eines Kältemittels, wobei das Kältemittel für eine Kühleinrichtung mit einem Kühlkreislauf mit zumindest einem Wärmeübertrager, in dem das Kältemittel eine Phasenänderung durchläuft, aus einem Kältemittelgemisch aus einem Anteil Kohlendioxid, einem Anteil Difluormethan und einem Anteil 1,1,1,2-Tetrafluorethan besteht, wobei der Anteil 1,1,1,2-Tetrafluorethan 1 bis 29 Molprozent beträgt.

Derartige Kältemittel zirkulieren im Allgemeinen innerhalb eines geschlossenen Kühlkreislaufs von Kühleinrichtungen und erfahren nacheinander verschiedene Änderungen eines Aggregatzustandes. Dabei sollen Kältemittel sollen so beschaffen sein, dass sie in einem Kühlkreislauf innerhalb einer vorgenannten Temperaturdifferenz verwendbar sind. Aus dem Stand der Technik sind sogenannte Einstoffkältemittel und auch Kältemittelgemische aus zumindest zwei Stoffen bekannt. Eine Benennung der Kältemittel erfolgt nach DIN 8960 Absatz 6 in der am Prioritätstage zuletzt gültigen Fassung.

Infolge gesetzlicher Bestimmungen darf ein Kältemittel nicht wesentlich zum Ozonabbau in der Atmosphäre oder der globalen Erwärmung beitragen. So sollen im Wesentlichen keine fluorierten Gase oder chlorierten Stoffe als Kältemittel eingesetzt werden, weshalb natürliche Kältemittel beziehungsweise Gase in Frage kommen. Darüber hinaus sollte ein Kältemittel nicht brennbar sein, um unter anderem eine Befüllung, einen Versand und einen Betrieb eines Kühlkreislaufs nicht aufgrund eventuell einzuhaltender Sicherheitsvorschriften zu erschweren. Auch verteuert sich die Herstellung eines Kühlkreislaufs durch die Verwendung eines brennbaren Kältemittels infolge der dadurch erforderlichen konstruktiven Maßnahmen. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 beziehungsweise der DIN 378 Klassen A2, A2L und A3 in der zuletzt am Prioritätstag gültigen Fassung fällt.

Darüber hinaus sollte ein Kältemittel ein relativ geringes CO₂-Äquivalent aufweisen, das heißt ein relatives Treibhauspotential oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 100 Jahre festgelegt werden. Zur Definition des relativen CO₂-Äquivalents beziehungsweise GWPs wird auf den fünften Sachstandsbericht des Intergovernmental Panel on Climate Change (IPCC), Assessment Report, Appendix 8.A, Table 8.A.1 in der zuletzt am Prioritätstag gültigen Fassung verwiesen.

Nachteilig bei Kältemitteln mit geringem GWP, beispielsweise < 2500, ist, dass diese Kältemittel in den für einen Kühlkreislauf relevanten Temperaturbereichen eine teilweise deutlich verringerte Kälteleistung im Vergleich zu Kältemitteln mit vergleichsweise größerem GWP aufweisen. Mit Kältemittelgemischen, die einen vergleichsweise hohen Anteil an Kohlendioxid aufweisen, kann ein niedriger GWP erzielt werden, wobei diese Kältemittelgemische aufgrund der unterschiedlichen, miteinander gemischten Stoffe zeotrope Eigenschaften aufweisen können, was wiederum bei vielen Kühlkreisläufen unerwünscht ist.

Bei einem zeotropen Kältemittelgemisch erfolgt ein Phasenübergang über einen Temperaturbereich, den sogenannten Temperaturglide. Als Temperaturglide wird dabei eine Differenz zwischen der Siedetemperatur und der Taupunkttemperatur bei konstantem Druck angesehen. Bei zeotropen Kältemittelgemischen ist regelmäßig ein hoher Anteil einer nicht brennbaren Komponente des Kältemittelgemisches enthalten, wobei diese sich jedoch durch einen vergleichsweise hohen GWP auszeichnet. Kohlendioxid erscheint zunächst als eine Komponente für ein Kältemittelgemisch geeignet, da dieses nicht brennbar ist und einen niedrigen GWP aufweist. Bei einer Mischung von Kohlendioxid mit einer weiteren Komponente ist jedoch wesentlich, dass, sofern die weitere Komponente brennbar ist, ein Anteil an Kohlendioxid vergleichsweise groß sein muss. Dies ist jedoch wiederum nachteilig, da Kohlendioxid eine Gefriertemperatur bzw. einen Gefrierpunkt von -56,6°C aufweist, was eine Erzielung von Temperaturen bis -60°C bei einer hohen Kohlendioxidkonzentration kaum ermöglicht.

Auch sollen Kältemittel möglichst einfach einsetzbar sein, d.h. keinen aufwendigen technischen Umbau einer Kühleinrichtung erfordern. Insbesondere bei Kältemitteln mit einem Temperaturglide > 3 K ist es erforderlich, ein Expansionsorgan und einen Wärmeübertrager bzw. Verdampfer des betreffenden Kühlkreislaufs an die Verdampfungstemperatur des Kältemittels anzupassen und eine entsprechende Regelung vorzusehen. Weiter ist zu unterscheiden zwischen Kältemitteln, die für einen statischen Betrieb einer Kühleinrichtung, d.h. einer Kühleinrichtung mit einer im Wesentlichen über einen längeren Zeitraum konstanten Temperatur am Wärmetauscher bzw. Verdampfer, und einer dynamischen Kühleinrichtung mit einem vergleichsweise schnellen Temperaturwechsel am Wärmeübertrager ausgebildet sind. Derartige dynamische Kühleinrichtungen sind unter anderem in Prüfkammern verbaut, so dass ein verwendetes Kältemittel innerhalb eines großen Temperaturbereichs einsetzbar sein muss.

Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -60°C bis +180°C eingestellt werden können. Bei Klimaprüfschränken können ergänzend gewünschte Klimabedingungen eingestellt werden, denen dann die Vorrichtung beziehungsweise das Prüfgut über einen definierten Zeitraum ausgesetzt wird. Derartige Prüfkammern sind regelmäßig beziehungsweise teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal beziehungsweise den Prüfraum durchströmenden Luft angeordnet sind. Dabei saugt ein Lüfter beziehungsweise ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann eine Temperatur zwischen einem Temperaturmaximum und einem Temperaturminimum der Prüfkammer wiederholt wechseln. Eine derartige Prüfkammer ist beispielsweise aus der EP 0 344 397 A2 bekannt.

Das in einem Kühlkreislauf zirkulierende Kältemittel muss so beschaffen sein, dass es im Kühlkreislauf innerhalb der vorgenannten Temperaturdifferenz verwendbar ist. Insbesondere kann eine Taupunkttemperatur des Kältemittels nicht höher sein als eine minimale Temperatur des zu erreichenden Temperaturbereiches des Kühlkreislaufs, da sonst bei einem Verdampfen des Kältemittels in dem Wärmeübertrager, der zur Kühlung des Prüfraums dient, die minimale Temperatur nicht erreichbar wäre. Die Taupunkttemperatur von azeotropischen Kältemitteln wird unmittelbar nach dem Expansionsorgan in dem Wärmeübertrager erreicht. Gerade Kühlkreisläufe für Prüfräume erfordern zur präzisen Temperierung der Prüfkammer eine sehr hohe zeitliche Temperaturkonstanz von ≤ ± 0,5 K, wie sie mit zeotropischen Kältemitteln nicht oder nur mit Einschränkungen erzielbar ist. Eine hohe Temperaturkonstanz ist hier nicht erzielbar, da sich die Taupunkttemperatur beziehungsweise ein Taupunkt des zeotropischen Kältemittels in Abhängigkeit einer Temperatur im Prüfraum im Bereich des Wärmetauschers im Prüfraum durch Temperaturdifferenzen örtlich verschieben kann. So kann sich die Temperatur während der Verdampfung ändern und es kann zu unterschiedlichen Temperaturen an dem Wärmeübertrager kommen. Die Einhaltung einer räumlichen Temperaturverteilung von ≤ ± 2 K ist bei einer Verwendung von zeotropischen Kältemitteln schwierig, da die beschriebenen Temperaturschichtungen an dem Wärmeübertrager sich auch im Prüfraum einstellen können.

Unter anderem werden die Kältemittel R23 bzw. R469A als Tieftemperaturkältemittel für Prüfkammern mit Temperaturen bis -70 °C verwendet. R23 weist jedoch einen GWP von 14.800 auf, was eine zukünftige Verwendung dieses Kältemittels ausschließt. R469A weist zwar einen deutlich niedrigeren GWP von 1.347 auf, bedingt jedoch eine Umgestaltung des Kühlkreislaufs der Prüfkammer, um eine Minderleistung im Vergleich zu R23 bzw. dem vergleichsweise hohen Temperaturgleit gegenüber R23 kompensieren zu können.

Weiter sind Kühleinrichtungen bekannt, bei denen ein zeotropes Kältemittelgemisch sukzessive verdampft wird. Das heißt Stoffkomponenten des Kältemittels werden nacheinander über ein Expansionsorgan verdampft. Derartige Kühleinrichtungen werden auch als Gemischkaskadenanlage bezeichnet und sind zur Ausbildung einer im Wesentlichen statischen Tieftemperatur geeignet.

Die WO 2017/157864 A1 offenbart ein Kältemittel, welches unter anderem Kohlendioxid und Pentafluorethan enthält. Für das Kältemittel sind Bereichsangaben für beispielsweise Kohlendioxid von 30 bis 70 Gew.-% und Pentafluorethan von 20 bis 80 Gew.-% enthalten. Difluormethan als Mischpartner wird ebenfalls offenbart.

Die DE 41 16 274 A1 betrifft ein Kältemittel, welches als Mischpartner Kohlendioxid und Difluormethan enthält. Unter anderem werden hier Anteile von 5 bis 50 Gew.-% Kohlendioxid und 25 bis 70 Gew.-% Difluormethan angegeben.

Die WO 2020/035689 A1 beschreibt einen Kühlkreislauf, u. a. mit einem internen Wärmeübertrager zur Unterkühlung eines Kältemittels auf einer Hochdruckseite des Kühlkreislaufs. Weiter wird ein Kältemittel beansprucht, dass zumindest aus einer Mischung aus Kohlendioxid und Difluormethan gebildet ist. Gemäß einem Ausführungsbeispiel kann das Kältemittel aus 86 Gewichtsprozent Kohlendioxid, 7 Gewichtsprozent Difluormethan und 7 Gewichtsprozent 1,1,1,2-Tetrafluorethan bestehen.

Der vorliegenden Erfindung liegt daher die Aufgabe zugrunde, ein Kältemittel für eine Kühleinrichtung, eine Prüfkammer mit einem Kältemittel sowie eine Verwendung eines Kältemittels vorzuschlagen, welches beziehungsweise welche die aus dem Stand der Technik bekannten Nachteile kompensiert.

Diese Aufgabe wird durch ein Kältemittel mit den Merkmalen des Anspruchs 1, eine Prüfkammer mit den Merkmalen des Anspruchs 11 und eine Verwendung eines Kältemittels mit den Merkmalen des Anspruchs 12 gelöst.

Bei dem erfindungsgemäßen Kältemittel für eine Kühleinrichtung mit einem Kühlkreislauf mit zumindest einem Wärmeübertrager, durchläuft das Kältemittel in dem Wärmeübertrager eine Phasenänderung, wobei das Kältemittel ein Kältemittelgemisch aus einem Anteil Kohlendioxid, einem Anteil Difluormethan und einem Anteil 1,1,1,2-Tetrafluorethan ist, wobei der Anteil Kohlendioxid an dem Kältemittelgemisch 54 bis 81 Molprozent, der Anteil Difluormethan 10 bis 20 Molprozent und der Anteil 1,1,1,2-Tetrafluorethan 1 bis 29 Molprozent beträgt.

Unter dem Begriff Anteil bzw. Molprozent wird ein Stoffmengenanteil verstanden. Die Bereichsangaben in mol% können auch als Bereichsangaben in Masse % verstanden werden.

Kohlendioxid (CO₂) ist auch als Kältemittel bzw. Komponente unter der Bezeichnung R744, 1,1,1,2-Tetrafluorethan (C₂H₂F₄) unter der Bezeichnung R134a, Pentafluorethan (C₂HF₅) unter der Bezeichnung R125, Difluormethan (CH₂F₂) unter der Bezeichnung R32, 2,3,3,3-Tetraflourpropen (C₃H₂F₄) unter der Bezeichnung R1234yf, Fluormethan (CH₃F) unter der Bezeichnung R41, Dichlordifluorethan (C₂H₂F₂Cl₂) unter der Bezeichnung R132, Ethan (C₂H₆) unter der Bezeichnung R170, Fluoroform (CHF₃) unter der Bezeichnung R23, 1,1-Difluorethen (C₂H₂F₂) unter der Bezeichnung R1132a, Ethen (C₂H₄) unter der Bezeichnung R1150, Fluorethen (C₂H₃F) unter der Bezeichnung R1141, Propan (C₃H₈) unter der Bezeichnung R290, Propen (C₃H₆) unter der Bezeichnung R1270, Hexafluorethan (C₂F₆) unter der Bezeichnung R116 und Fluorethan (CH₂FCH₃) unter der Bezeichnung R161 gemäß DIN 8960 in der zuletzt gültigen Fassung der dem Prioritätstag der Anmeldung bekannt.

Erfindungsgemäß ist ein Kältemittelgemisch aus Kohlendioxid und einem bzw. mehreren fluorierten Kältemitteln vorgesehen, die einen geringen GWP aufweisen und nicht oder eingeschränkt brennbar sind. Ein Anteil an Kohlendioxid muss dabei möglichst gering sein, da sonst ein Gefrierpunkt des Kältemittelgemisches mit einem steigenden Anteil von Kohlendioxid zunimmt. Ein geringerer Anteil an Kohlendioxid mindert jedoch eine das GWP reduzierende Wirkung des Kohlendioxids. So weisen teilfluorierte Kältemittel einen deutlich höheren GWP als Kohlendioxid auf, wobei diese jedoch auch eine verbesserte brandhemmende Wirkung haben.

Wie sich überraschender Weise herausgestellt hat, kann mit einem Kältemittelgemisch mit einem Anteil Kohlendioxid von 54 bis 81 Molprozent mit Difluormethan von 10 bis 20 Molprozent sowie mit 1,1,1,2-Tetrafluorethan von 1 bis 29 Molprozent ein ausreichend niedriger GWP erzielt werden. Durch ein Mischen der Komponenten des Kältemittelgemisches können die negativen Eigenschaften des Kohlendioxids reduziert werden. Insbesondere erlaubt der Einsatz von Difluormethan und 1,1,1,2-Tetrafluorethan in dem angegebenen Mischungsverhältnis mit Kohlendioxid eine flexible Anpassung des Kältemittels durch Mischung mit den Komponenten an verschiedene Anwendungsfälle in Prüfkammern. Beispielsweise eine Anpassung an bereits vorhandene Kühlkreisläufe, eine Erzielung bestimmter Tieftemperaturen oder eine Einhaltung einer erforderten Temperaturkonstanz.

Ein Anteil Kohlendioxid an dem Kältemittelgemisch kann mehr als 69 Masseprozent betragen. Alle hier genannten Bereichsangaben für den Anteil an Kohlendioxid können auf mindestens diese Menge an Kohlendioxid begrenzt sein.

Ein Anteil Kohlendioxid an dem Kältemittelgemisch kann 64 bis 72 Molprozent, betragen.

Gemäß einer weiteren Ausführungsform kann ein Anteil 1,1,1,2-Tetrafluorethan 5 bis 24 Molprozent, bevorzugt 9 bis 19 Molprozent, betragen.

Eine weitere Komponente kann Pentafluorethan und/oder Fluormethan sein. Wie sich herausgestellt hat sind diese Komponenten besonders vorteilhaft zur Anpassung des Kältemittels an verschiedene Anforderungen nutzbar.

Ein Anteil Fluormethan kann 1 bis 15 Molprozent, bevorzugt 1 bis 10 Molprozent, besonders bevorzugt 1 bis 5 Molprozent, betragen.

Besonders vorteilhaft kann ein Anteil Pentafluorethan 1 bis 20 Molprozent, bevorzugt 1 bis 15 Molprozent, besonders bevorzugt 5 bis 10 Molprozent , betragen. Wie sich herausgestellt hat ist eine brandhemmende Wirkung von Pentafluorethan vergleichsweise größer als die von Kohlendioxid. Pentafluorethan hat eine im Vergleich zu Kohlendioxid höhere flammhemmende Wirkung, was vorteilhaft ist. Nachteilig ist, dass Pentafluorethan einen GWP von 3150 aufweist, der damit höher sein kann als der anderer Komponenten des Kältemittelgemisches.

Das Kältemittelgemisch kann aus drei Komponenten oder aus vier oder mehr Komponenten ausgebildet sein. Folglich kann das Kältemittelgemisch ein ternäres Kältemittelgemisch oder ein quinäres Kältemittelgemisch sein. Dabei kann vorgesehen sein, dass das Kältemittelgemisch darüber hinaus keine weiteren Komponenten enthält.

Das Kältemittel kann als eine zusätzliche Komponente Dichlordifluorethan , Ethan, Ethen, Fluorethen, Ethin, Propan, Propen und/oder Fluorethan mit jeweils bis zu 30 Molprozent, bevorzugt bis zu Molprozent, besonderes bevorzugt bis zu 10 Molprozent, aufweisen. Mit diesem vergleichsweise niedrigem Anteil dieser Komponente bzw. Komponenten ist bereits eine Verbesserung der Eigenschaften des Kältemittels erzielbar.

In der nachfolgenden Tabelle sind mit dem Kältemittel 4 Beispiele für Kältemittel entsprechend den zuvor beschriebenen Ausführungsformen angegeben.

**Tabelle**

| Kältemittel | R744 | R134a | R32 | R41 | R125 | GWP |
|---|---|---|---|---|---|---|
| | [mol%] | [mol%] | [mol%] | [mol%] | [mol%] | - |
| 1 | 74 - 82 | 6 - 14 | 7 - 15 | 0 | 0 | 268 - 465 |
| | 69 - 87 | 1-19 | 2-20 | 0 | 0 | 125 - 570 |
| | 64-92 | 1-24 | 1-25 | 0 | 0 | 87 - 667 |
| 2 | 74 - 82 | 4- 12 | 7-15 | 1-5 | 0 | 197 - 427 |
| | 69 - 87 | 1-16 | 2-20 | 1-10 | 0 | 57 - 522 |
| | 64-92 | 1-20 | 1-25 | 1-15 | 0 | 46 - 609 |
| 3 | 64-72 | 6 - 14 | 7-15 | 0 | 5-10 | 707 - 1098 |
| | 59 - 76 | 1-19 | 2-20 | 0 | 1-15 | 324 - 1392 |
| | 54-81 | 1-24 | 1-25 | 0 | 1-20 | 249 - 1634 |
| 4 | 64-72 | 9-19 | 10 - 20 | 0 | 0 | 390 - 598 |
| | 59 - 76 | 5-24 | 5 - 25 | 0 | 0 | 289 - 692 |
| | 54-81 | 1-29 | 1-30 | 0 | 0 | 169 - 777 |

In weiteren Ausführungsformen kann das Kältemittel einen Temperaturglide von ≤ 5 K oder > 5 K aufweisen. Der Temperaturglide ist auf einen Verdampfungsdruck von einem Bar bezogen und kann zwischen 0,5 K bis 25 K liegen. Ein besonders niedriger Temperaturglide von ≤ 5 K kann unter anderem mit den in der Tabelle angegebenen Kältemitteln 1, 2, 3, und 4 erzielt werden. Ein Temperaturglide von > 5 K kann ebenfalls mit den in der Tabelle angegebenen Kältemitteln 1, 2, 3 und 4 erzielt werden. Bei den Kältemitteln mit dem Temperaturglide > 5 K kann ein interner Wärmeübertrager bzw. Rekuperator zum sicheren Betrieb und zum Erreichen von Temperaturen < -55 °C im Kühlkreislauf notwendig sein. Bei den Kältemitteln mit einem Temperaturglide ≤ 5 K kann dagegen auf einen internen Wärmeübertrager zur Erzielung einer hohen Kälteleistung verzichtet werden. Hier muss jedoch gegebenenfalls eine Verrohrung des Kühlkreislaufs und ein Verdichter aufgrund der geringen Dichte des jeweiligen Kältemittels bei tiefen Verdampfungstemperaturen angepasst werden. Gegebenenfalls können mit diesen Kältemitteln im Vergleich zu den Kältemitteln mit einem Temperaturglide von > 5 K nur vergleichsweise höhere Tieftemperaturen erzielt werden.

Das Kältemittel kann ein relatives CO2-Äquivalent, bezogen auf 100 Jahre, von < 1400 aufweisen und/oder das Kältemittel kann brennbar sein. Folglich kann das Kältemitteln wenig umweltschädigend sein. Darüber hinaus kann das Kältemittel besonders sicher sein, wodurch es möglich wird, den Kühlkreislauf und insbesondere eine Prüfkammer kostengünstiger auszubilden, da keine besonderen Sicherheitsvorkehrungen hinsichtlich Brennbarkeit des Kältemittels zu beachten sind.

Das Kältemittel kann dann zumindest nicht der Brandklasse C und/oder der Kältemittelsicherheitsgruppe A1 zugeordnet werden. Darüber hinaus wird ein Versand beziehungsweise ein Transport des Kühlkreislaufs vereinfacht, da der Kühlkreislauf bereits vor einem Transport, unabhängig von der Transportart mit dem Kältemittel befüllt werden kann. Bei brennbarem Kältemittel ist gegebenenfalls erst eine Befüllung im Rahmen einer Inbetriebnahme am Aufstellort möglich. Weiter ist eine Verwendung des nicht brennbaren Kältemittels bei vorhandenen Zündquellen möglich.

Die erfindungsgemäße Prüfkammer zur Konditionierung von Luft umfasst einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -60 °C bis +180 °C, bevorzugt -70 °C bis +180 °C, besonders bevorzugt -80 °C bis + 180 °C, innerhalb des Prüfraums ausbildbar ist, wobei die Temperiervorrichtung eine Kühleinrichtung mit einem Kühlkreislauf mit einem erfindungsgemäßen Kältemittel, einem Wärmeübertrager, einem Verdichter, einem Kondensator und einem Expansionsorgan aufweist. Zu den Vorteilen der erfindungsgemäßen Prüfkammer wird auf die Vorteilsbeschreibung des erfindungsgemäßen Kältemittels verwiesen.

Im Gegensatz zu einer Gemischkaskadenanlage kann hier das Kältemittel mit allen im Kältemittel enthaltenen Stoffkomponenten gleichzeitig über das Expansionsorgan verdampft werden. Da ein Gefrierpunkt des Kohlendioxids bei -56,6 °C liegt, sind Kältemittelgemische, die einen großen Anteil an Kohlendioxid enthalten, prinzipiell nicht mehr zur Erzielung von Temperaturen unter -56,6 °C geeignet. Durch die Verwendung des erfindungsgemäßen Kältemittels wird es jedoch möglich, eine Taupunkttemperatur des Kältemittels von unter -70°C zu erzielen.

Der Kühlkreislauf kann einen internen Wärmeübertrager aufweisen, wobei der interne Wärmeübertrager an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager angeschlossen sein kann. Durch den Einsatz des internen Wärmetauschers und die damit durchgeführte Kühlung des verflüssigten Kältemittels der Hochdruckseite können Temperaturen unter -56 °C leicht erreicht werden. Dabei kann die Verdampfungstemperatur des mittels des internen Wärmeübertragers gekühlten Kältemittels am Expansionsorgan relativ zu einer Verdampfungstemperatur eines ungekühlten Kältemittels abgesenkt werden. Die über den internen Wärmetauscher von der Niederdruckseite auf die Hochdruckseite übertragene Kälteleistung kann somit zumindest teilweise, bevorzugt ausschließlich zur Absenkung der Verdampfungstemperatur des Kältemittels am Expansionsorgan genutzt werden. Weiter wird es überhaupt erst möglich, ein Kältemittel mit einem Temperaturglide > 5K zu verwenden, da dann der Ort der Taupunkttemperatur des Kältemittels beziehungsweise der Taupunkt des Kältemittels in den internen Wärmeübertrager verschoben werden kann. Infolge des Temperaturglides des zeotropen Kältemittels kann die erzielte Taupunkttemperatur des Kältemittels vergleichsweise hoch sein und so eine weitergehende Abkühlung des Wärmeübertragers verhindern.

Es kann daher nur ein Teil des Kältemittels in dem Wärmeübertrager verdampft und der nicht nutzbare Teil des Nassdampfanteils des Kältemittels in den internen Wärmeübertrager verlagert werden. Insgesamt wird es so möglich, auch Kältemittel mit einem Anteil an Kohlendioxid, die einerseits umweltfreundlich sind aber andererseits zeotrope Eigenschaften aufweisen, zur Ausbildung niedriger Temperaturen in einem Prüfraum zu verwenden. Wenn ein Teil des Temperaturglides beziehungsweise ein Teil des Nassdampfes des Kältemittels von dem Wärmeübertrager im Prüfraum in den internen Wärmeübertrager verlagert wird, wird es darüber hinaus möglich, mit dem zeotropen Kältemittel eine vergleichsweise verbesserte Temperaturkonstanz zu erzielen. Eine über den Wärmeübertrager abgegebene Kälteleistung kann dann nur innerhalb eines Abschnitts des Temperaturglides erzeugt werden, so dass eine Verschiebung des Taupunktes des Kältemittels im Kühlkreislauf kaum eine Temperaturkonstanz des Wärmeübertragers beeinflussen kann. Weiter kann vorgesehen sein, dass hier lediglich ein einziger Wärmeübertrager zur Kühlung eines Mediums, hier der Luft im Prüfraum, verwendet wird.

Der Wärmeübertrager kann derart dimensioniert ausgebildet sein, dass das Kältemittel nur teilweise in dem Wärmeübertrager verdampfen kann. Hieraus ergibt sich der Vorteil, dass der Taupunkt beziehungsweise der Ort der Taupunkttemperatur des Kältemittels aus dem Wärmeübertrager heraus, in den internen Wärmeübertrager verschoben werden kann. Aufgrund eines Temperaturglides des zeotropen Kältemittels wird bei dem teilweisen Verdampfen des Kältemittels in dem Wärmeübertrager eine niedrigere Temperatur im Wärmeübertrager erzielt, als bei dem nachfolgenden, restlichen Verdampfen des Kältemittels in dem internen Wärmeübertrager.

In einer Ausführungsform der Prüfkammer kann der Wärmeübertrager in dem Prüfraum angeordnet sein. Auch kann der Wärmeübertrager dann in einem Luftbehandlungsraum des Prüfraums angeordnet sein, so dass von einem Lüfter umgewälzte Luft mit einem Wärmeübertrager in Kontakt gelangen kann. So wird es möglich eine umgewälzte Luftmenge des Prüfraums mittels der Kühleinrichtung über den Wärmeübertrager im Prüfraum direkt abzukühlen. Die Prüfkammer kann dann den Kühlkreislauf als einen alleinigen, einzigen Kühlkreislauf aufweisen. Der Kühlkreislauf ist dann direkt an den Prüfraum angeschlossen.

In einer weiteren Ausführungsform der Prüfkammer kann der Kondensator als ein Kaskaden-Wärmeübertrager eines weiteren Kühlkreislaufs der Kühleinrichtung ausgebildet sein. Demnach kann die Prüfkammer dann zumindest zwei Kühlkreisläufe aufweisen, wobei der Kühlkreislauf eine zweite Stufe der Kühleinrichtung und ein weiterer Kühlkreislauf, der dann dem Kühlkreislauf vorgelagert ist, eine erste Stufe der Kühleinrichtung ausbilden kann. Der Kondensator dient dann als ein Kaskaden-Wärmeübertrager beziehungsweise Wärmeübertrager für den Kühlkreislauf. Bei dieser Ausführungsform einer Prüfkammer wird es möglich, besonders niedrige Temperaturen in dem Prüfraum auszubilden.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Prüfraum ermöglicht wird. Wenn der Wärmeübertrager und der Heiz-Wärmeübertrager mittels einer Regeleinrichtung zur Kühlung oder Wärmung der im Prüfung umgewälzten Luft gezielt gesteuert werden können, kann mittels der Temperiervorrichtung innerhalb des Prüfraums eine Temperatur in dem vorstehend angegebenen Temperaturbereich ausgebildet werden. Dabei kann unabhängig vom Prüfgut beziehungsweise eines Betriebszustandes des Prüfgutes eine zeitliche Temperaturkonstanz von ±1 K, vorzugsweise ±0,3 K bis ±0,5 K oder kleiner ±0,3 K während eines Prüfintervalls in dem Prüfraum ausgebildet werden. Unter einem Prüfintervall wird je ein Zeitabschnitt eines vollständigen Prüfzeitraums verstanden, in dem das Prüfgut einer im Wesentlichen gleichbleibenden Temperatur oder Klimabedingung ausgesetzt wird. Der Heiz-Wärmeübertrager kann zusammen mit dem Wärmeübertrager des Kühlkreislaufs derart kombiniert sein, dass ein gemeinsamer Wärmeübertragerkörper ausgebildet ist, der vom Kältemittel durchströmbar ist und der Heizelemente einer elektrischen Widerstandsheizung aufweist. Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

Im Kühlkreislauf kann ein erster Bypass mit zumindest einem regelbaren zweiten Expansionsorgan ausgebildet sein, wobei der erste Bypass in einer Strömungsrichtung vor dem internen Wärmeübertrager und nachfolgend dem Kondensator an den Kühlkreislauf angeschlossen sein kann, wobei der erste Bypass als regelbare interne Ergänzungskühlung ausgebildet sein kann. Der erste Bypass kann so eine Rückeinspritzeinrichtung für Kältemittel ausbilden. Demnach kann von dem regelbaren zweiten Expansionsorgan im internen Wärmeübertrager auf der Niederdruckseite Kältemittel zugeführt werden. Der erste Bypass kann dann an der Niederdruckseite des Kühlkreislaufs in einer Strömungsrichtung vor dem internen Wärmeübertrager und nachfolgend dem Wärmeübertrager angeschlossen sein. Das durch das zweite Expansionsorgan gekühlte beziehungsweise seinem Temperaturniveau abgesenkte Kältemittel kann dann durch den internen Wärmeübertrager hindurch geleitet werden und eine Kühlung des Kältemittels auf der Hochdruckseite des internen Wärmeübertragers verstärken. Auch wird eine Kühlleistung des internen Wärmeübertragers dadurch noch genauer regelbar.

In dem Kühlkreislauf kann ein zweiter Bypass mit zumindest einem dritten Expansionsorgan ausgebildet sein, wobei der zweite Bypass das Expansionsorgan in Strömungsrichtung nachfolgend dem Kondensator und vor dem internen Wärmeübertrager überbrückt, wobei über das dritte Expansionsorgan das Kältemittel so dosierbar ist, dass eine Sauggastemperatur und/oder ein Sauggasdruck des Kältemittels auf der Niederdruckseite des Kühlkreislaufs vor dem Verdichter geregelt werden kann. Dadurch kann unter anderem verhindert werden, dass der Verdichter, bei dem es sich beispielsweise um einen Kompressor handeln kann, eventuell überhitzt dann beschädigt wird. Folglich kann über den zweiten Bypass durch Betätigung des dritten Expansionsorgans vor dem Verdichter befindliches gasförmiges Kältemittel durch Zudosieren von noch flüssigem Kältemittel gekühlt werden. Eine Betätigung des dritten Expansionsorgans kann durch eine Steuervorrichtung erfolgen, die ihrerseits mit einem Druck- und/oder Temperatursensor in einem Kühlkreislauf vor dem Verdichter gekoppelt ist. Besonders vorteilhaft ist es, wenn über den zweiten Bypass eine Sauggastemperatur von ≤ 30 °C eingestellt werden kann. Auch kann das Kältemittel so dosiert werden, dass eine Betriebsdauer des Verdichters regelbar ist. Prinzipiell ist es nachteilig, wenn der Verdichter beziehungsweise Kompressor vielfach eingeschaltet und ausgeschaltet wird. Eine Lebensdauer eines Kompressors kann verlängert werden, wenn dieser längere Zeitabschnitte in Betrieb ist. Über den zweiten Bypass kann ein Kältemittel an dem Expansionsorgan oder dem Kondensator vorbeigeführt werden, um beispielsweise ein automatisches Abschalten des Kompressors zu verzögern und eine Betriebsdauer des Kompressors zu verlängern.

In dem Kühlkreislauf kann ein weiterer Bypass mit zumindest einem weiteren Expansionsorgan ausgebildet sein, wobei der weitere Bypass den Verdichter in Strömungsrichtung nachfolgend dem Verdichter und vor dem Kondensator überbrückt, derart, dass eine Sauggastemperatur und/oder ein Sauggasdruck des Kältemittels auf der Niederdruckseite des Kühlkreislaufs vor dem Verdichter regelbar sein kann, und/oder dass eine Druckdifferenz zwischen der Hochdruckseite und einer Niederdruckseite des Kühlkreislaufs ausgeglichen werden kann. Der zweite Bypass kann ergänzend mit einem einstellbaren oder regelbaren Ventil, beispielsweise einem Magnetventil ausgestattet sein. Durch die Verbindung von Hochdruckseite und Niederdruckseite über das weitere Expansionsorgan kann sichergestellt werden, dass bei einem Anlagenstillstand das so verdichtete und gasförmige Kältemittel von der Hochdruckseite allmählich auf die Niederdruckseite des Kühlkreislaufs strömt. So wird auch bei geschlossenem Expansionsorgan sichergestellt, dass ein allmählicher Druckausgleich zwischen der Hochdruckseite und der Niederdruckseite erfolgt. Ein Querschnitt des weiteren Expansionsorgans kann dabei so bemessen sein, dass ein Überströmen des Kältemittels von der Hochdruckseite zu der Niederdruckseite einen normalen Betrieb der Kühleinrichtung nur unwesentlich beeinflusst. Gleichwohl kann vorgesehen sein, dass vor dem Verdichter befindliches gasförmiges Kältemittel durch Zudosieren von dem flüssigen Kältemittel über den weiteren Bypass gekühlt wird.

Der interne Wärmeübertrager kann weiter als eine Unterkühlstrecke oder ein Wärmetauscher, insbesondere Plattenwärmetauscher, ausgebildet sein. Die Unterkühlstrecke kann bereits durch zwei aneinander anliegende Leitungsabschnitte des Kühlkreislaufs ausgebildet sein.

Das Expansionsorgan kann ein Drosselorgan und ein Magnetventil aufweisen, wobei über das Drosselorgan und das Magnetventil Kältemittel dosiert werden kann. Das Drosselorgan kann ein einstellbares Ventil oder eine Kapillare sein, über das dann mittels des Magnetventils Kältemittel geleitet wird. Das Magnetventil kann seinerseits mittels einer Regeleinrichtung betätigt werden.

Auch kann die Temperiervorrichtung eine Regeleinrichtung mit zumindest einem Drucksensor und/oder zumindest einem Temperatursensor in dem Kühlkreislauf umfassen, wobei ein Magnetventil mittels der Regeleinrichtung in Abhängigkeit von einer gemessen Temperatur beziehungsweise eines Drucks betätigt werden kann. Die Regeleinrichtung kann Mittel zur Datenverarbeitung umfassen, die Datensätze von Sensoren verarbeiten und die Magnetventile ansteuern. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und gegebenenfalls eine Abschaltung der Prüfkammer veranlassen, um die Prüfkammer und das Prüfgut vor einer Beschädigung durch kritische oder unerwünschte Betriebszustände der Prüfkammer zu schützen.

Bei der erfindungsgemäßen Verwendung eines Kältemittels, bestehend aus einem Kältemittelgemisch aus einem Anteil Kohlendioxid von 54 bis 81 Molprozent, einem Anteil Difluormethan von 10 bis 20 Molprozent und einem Anteil 1,1,1,2-Tetrafluorethan von 1 bis 29 Molprozent wird das Kältemittel zur Konditionierung von Luft in einem gegenüber einer Umgebung verschließbaren und temperaturisolierten Prüfraum einer Prüfkammer zur Aufnahme von Prüfgut verwendet, wobei mittels einer Kühleinrichtung einer Temperiervorrichtung der Prüfkammer, mit einem Kühlkreislauf mit dem Kältemittel, einem Wärmeübertrager, einem Verdichter, einem Kondensator und einem Expansionsorgan, eine Temperatur in einem Temperaturbereich von -60 °C bis +180 °C, bevorzugt - 70 °C bis +180 °C, besonders bevorzugt -80 °C bis +180 °C, innerhalb des Prüfraums ausgebildet wird.

Mittels eines internen Wärmeübertragers des Kühlkreislaufs, der an einer Hochdruckseite des Kühlkreislaufs in einer Strömungsrichtung vor dem Expansionsorgan und nachfolgend dem Kondensator, und an einer Niederdruckseite des Kühlkreislaufs in einer Strömungsrichtung vor dem Verdichter und nachfolgend dem Wärmeübertrager angeschlossen sein kann, kann das Kältemittel der Hochdruckseite gekühlt werden, wobei die Kühlung des Kältemittels der Hochdruckseite mittels des internen Wärmeübertragers zur Absenkung einer Verdampfungstemperatur am Expansionsorgan genutzt werden kann.

Während der Absenkung der Verdampfungstemperatur des Kältemittels der Hochdruckseite kann ein Saugdruck des Kältemittels der Niederdruckseite konstant gehalten werden. Ein größerer anlagentechnischer Aufwand, beispielsweise eine ergänzende Regelung des Saugdrucks, wie auch über eine Regelung des Expansionsorgans in Abhängigkeit des Saugdrucks, ist dann nicht zwingend erforderlich. Insbesondere kann der Verdichter dann auch mit einer konstanten Leistung, unabhängig von einem Betriebszustand des Kühlkreislaufs, betrieben werden. Gerade bei einer Verwendung von Kolbenpumpen als Verdichter ist es wesentlich, dass diese zur Erzielung einer langen Lebensdauer über lange Zeiträume und konstanter Drehzahl im Einsatz sind.

Das Kältemittel der Hochdruckseite kann von dem Kältemittel der Niederdruckseite bei einem konstanten Saugdruck auf der Niederdruckseite mittels des internen Wärmeübertragers gekühlt werden. Folglich kann das Kältemittel kann auf einer Verdampfungsstrecke des Kühlkreislaufs von dem Expansionsorgan bis einschließlich dem internen Wärmeübertrager bei einem konstanten Saugdruck verdampfen. Bei dem konstanten Saugdruck beziehungsweise Verdampfungsdruck des Kältemittels kann dann das Kältemittel von dem Expansionsorgan mit einer niedrigen Verdampfungstemperatur bis hin zu dem internen Wärmeübertrager mit einer hohen Verdampfungstemperatur entsprechend dem Temperaturglide des Kältemittels verdampfen. Die durch den Temperaturglide sich ergebende Taupunkttemperatur kann dabei über der Temperatur des zu kühlenden Mediums beziehungsweise der Luft in dem Prüfraum liegen. Sobald eine Verdampfungstemperatur des Kältemittels bei gleichem Saugdruck der Temperatur der zu kühlenden Luft in dem Prüfraum entspricht, kann keine weitere Abkühlung der Luft erzielt werden. Die Taupunkttemperatur, die im weiteren Wärmetauscher erreicht wird, liegt jedoch noch unter der Flüssigkeitstemperatur des Kältemittels auf der Hochdruckseite des internen Wärmeübertragers, so dass eine Flüssigkeitstemperatur des Kältemittels weiter reduziert werden kann. Demnach kann eine Verdampfungstemperatur nach dem Expansionsorgan ohne eine Veränderung des Saugdrucks abgesenkt und damit eine weitergehende Kühlung der Luft in dem Prüfraum erzielt werden.

Das Kältemittel kann nur teilweise in dem Wärmeübertrager verdampft werden. So kann eine erste Teilmenge des über das Expansionsorgan geleiteten Kältemittels in dem Wärmeübertrager und eine zweite Teilmenge des Kältemittels in dem internen Wärmeübertrager verdampft werden. Eine Verdampfungsstrecke des Kühlkreislaufs, innerhalb dem das Kältemittel verdampft, kann sich von dem Expansionsorgan bis hin zu dem internen Wärmeübertrager erstrecken. Dabei kann die Verdampfungsstrecke durch den internen Wärmeübertrager verlaufen, wobei vorzugsweise ein Taupunkt des Kältemittels an einem Ausgang des internen Wärmeübertragers in Strömungsrichtung vor dem Verdichter liegen kann. Ein Verhältnis der ersten Teilmenge zu der zweiten Teilmenge kann sich während eines Betriebs des Kühlkreislaufs in Abhängigkeit einer Temperatur in dem Prüfraum beziehungsweise an dem Wärmeübertrager verändern. Beispielsweise kann sich bei einer vergleichsweise großen Temperaturdifferenz zwischen der Temperatur des Wärmeübertragers und einer Temperatur im Prüfraum eine beschleunigte Erwärmung des Kältemittels im Wärmeübertrager ergeben, die zu einer Verschiebung des Taupunkts des Kältemittels bis hin zu einem Eingang des internen Wärmeübertragers oder Ausgang des Wärmeübertragers in Strömungsrichtung vor dem Verdichter führt. Eine derartige Verschiebung des Taupunktes kann toleriert werden, so lange noch keine vergleichsweise niedrige Temperatur beziehungsweise Soll-Temperatur im Prüfraum ausgebildet ist. Nähert sich die Temperatur des Wärmetauschers der Temperatur im Prüfraum an, erfolgt eine Verschiebung des Taupunktes und damit eine Vergrößerung der zweiten Teilmenge relativ zur ersten Teilmenge des Kältemittels.

Das Kältemittel kann mittels des Expansionsorgans getaktet in einem Zeitintervall dosiert und in dem Wärmeübertrager verdampft werden. Das Expansionsorgan kann beispielsweise ein mit einer Regeleinrichtung ansteuerbares Magnetventil sein. Durch die Taktung des Magnetventils bzw. des Expansionsorgans wird es möglich den Wärmeübertrager gezielt nur mit geringen Mengen an Kältemittel zu beaufschlagen. Insbesondere bei einer Aufrechterhaltung von geringen Temperaturen wird oft nur eine geringe Kälteleistung benötigt. Diese kann auch durch Dosierung einer Menge an Kältemittel, welche im Wärmeübertrager verdampft, erzeugt werden. Diese Dosierung kann besonders einfach durch das getaktete Öffnen und Schließen des Expansionsorgans innerhalb eines Zeitintervalls ermöglicht werden. Unter einem getakteten Öffnen und Schließen wird hier insbesondere eine konstante Abfolge von Takten verstanden.

Die Absenkung der Verdampfungstemperatur des Kältemittels der Hochdruckseite kann selbstregelnd erfolgen. Je nach Temperatur am Wärmeübertrager kann nicht mehr verdampfendes Kältemittel aus diesem in Strömungsrichtung ausgeleitet werden, da in diesem Fall die Temperatur am Wärmeübertrager nicht mehr ausreicht um einen Phasenwechsel des Kältemittels zu erzeugen. So wird Nassdampf beziehungsweise flüssiges Kältemittel im internen Wärmeübertrager nachverdampft, da hier ein Temperaturunterschied zwischen der Hochdruckseite und der Niederdruckseite immer größer als am Wärmeübertrager sein kann. Wenn mittels des internen Wärmeübertragers eine Temperatur des flüssigen Kältemittels vor dem Expansionsorgan durch den Wärmeaustausch am internen Wärmeübertrager reduziert wird, erhöht sich die Energiedichte des Kältemittels vor dem Expansionsorgan und die damit erzielbare Temperaturdifferenz am Wärmeübertrager. Eine Regelung des Zusammenspiels von Expansionsorgan, Wärmeübertrager und internem Wärmeübertrager ist prinzipiell nicht erforderlich.

Der konstante Saugdruck kann insbesondere auch während einer Absenkung der Verdampfungstemperatur des Kältemittels der Hochdruckseite durch den internen Wärmeübertrager aufrechterhalten werden. Demnach ist die Kühlung des Kältemittels der Hochdruckseite über den internen Wärmeübertrager auch zumindest teilweise oder auch ausschließlich zur Absenkung einer Verdampfungstemperatur des Kältemittels am Expansionsorgan nutzbar.

Eine Taupunkttemperatur des Kältemittels kann höher sein als eine Minimaltemperatur des Temperaturbereichs. Bei den aus dem Stand der Technik bekannten Prüfkammern ist dann mit einem derartigen Kältemittel nicht mehr die Minimaltemperatur des Temperaturbereichs im Prüfraum ausbildbar, sondern eine vergleichsweise höhere Minimaltemperatur, die im Wesentlichen der Taupunkttemperatur des Kältemittels entspricht. Bei der erfindungsgemäßen Prüfkammer kann jedoch ein Kältemittel verwendet werden, dessen Taupunkttemperatur höher ist als eine erzielbare Minimaltemperatur des Temperaturbereichs, da das verflüssigte Kältemittel auf der Hochdruckseite mittels des internen Wärmeübertragers gekühlt werden kann, sodass eine Verdampfungstemperatur des Kältemittels am Expansionsorgan vergleichsweise geringer sein kann.

Das Kältemittel kann bei einem Saugdruck beziehungsweise Verdampfungsdruck in einem Druckbereich von 0,3 bis 5 bar absolut verdampft werden. Der Einsatz des Kältemittels innerhalb dieses Druckbereichs ermöglicht eine kostengünstige Ausbildung des Kühlkreislaufs, da dann keine besonderen, druckstabilen Baugruppen und Komponenten zur Ausbildung der Niederdruckseite des Kühlkreislaufs erforderlich sind.

Auch kann das Kältemittel bei einem Kondensationsdruck in einem Druckbereich von 5 bis 35 bar absolut kondensiert werden. Auch hier kann die Hochdruckseite dann mit Baugruppen und Komponenten ausgebildet werden, die nicht an vergleichsweise höhere Drücke angepasst sein müssen.

Weitere Ausführungsformen einer Verwendung ergeben sich aus den Merkmalsbeschreibungen der auf den Vorrichtungsanspruch 1 rückbezogenen Unteransprüche.

Nachfolgend werden bevorzugte Ausführungsformen der Erfindung unter Bezugnahme auf die beigefügten Zeichnungen näher erläutert.

Es zeigen:
- **Fig. 1**: eine schematische Darstellung einer ersten Ausführungsform einer Kühleinrichtung;
- **Fig. 2**: ein Druck-Enthalpie-Diagramm für ein Kältemittel;
- **Fig. 3**: eine schematische Darstellung einer zweiten Ausführungsform einer Kühleinrichtung;
- **Fig. 4**: eine schematische Darstellung einer dritten Ausführungsform einer Kühleinrichtung;
- **Fig. 5**: eine schematische Darstellung einer vierten Ausführungsform einer Kühleinrichtung;
- **Fig. 6**: eine schematische Darstellung einer fünften Ausführungsform einer Kühleinrichtung;
- **Fig. 7**: eine schematische Darstellung einer sechsten Ausführungsform einer Kühleinrichtung;
- **Fig. 8**: eine schematische Darstellung einer siebten Ausführungsform einer Kühleinrichtung;
- **Fig. 9**: eine schematische Darstellung einer achten Ausführungsform einer Kühleinrichtung;
- **Fig. 10**: eine schematische Darstellung einer neunten Ausführungsform einer Kühleinrichtung;
- **Fig. 11**: ein Temperatur-Enthalpie-Diagramm für ein Kältemittel;
- **Fig. 12**: ein Takt-Zeit-Diagramm für ein Expansionsorgan;
- **Fig. 13**: ein Temperatur-Fläche-Diagramm für einen Kühlkreislauf.

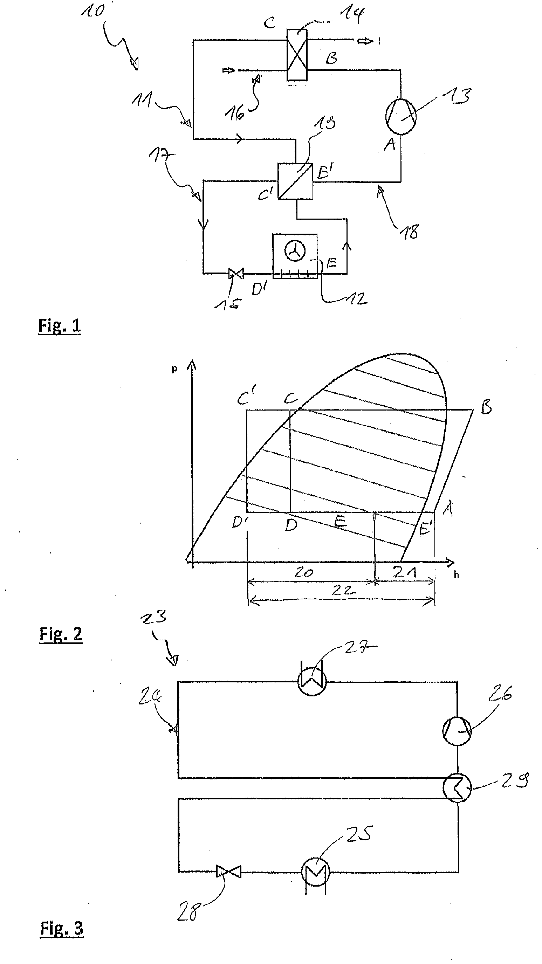

Die **Fig. 1** zeigt eine erste Ausführungsform einer Kühleinrichtung 10 einer hier nicht näher dargestellten Prüfkammer. Die Kühleinrichtung 10 umfasst einen Kühlkreislauf 11 mit einem Kältemittel, einem Wärmeübertrager 12, einem Verdichter 13 und einem Kondensator 14 sowie einem Expansionsorgan 15. Der Kondensator 14 wird hier durch einen weiteren Kühlkreislauf 16 gekühlt. Der Wärmeübertrager 12 ist in einem hier nicht dargestellten Prüfraum der Prüfkammer angeordnet. Weiter weist der Kühlkreislauf 11 eine Hochdruckseite 17 und eine Niederdruckseite 18 auf, an die ein interner Wärmeübertrager 19 angeschlossen ist.

Die **Fig. 2** zeigt ein Druck-Enthalpie-Diagramm (log p/h-Diagramm) für das im Kühlkreislauf 11 zirkulierende Kältemittel, bei dem es sich um ein zeotropes Kältemittel handelt. Ausgehend von der Position A wird nach einer Zusammenschau der **Fig. 1** und **2** das Kältemittel vor dem Verdichter 13 angesaugt und komprimiert, sodass ein Druck entsprechend der Position B in Strömungsrichtung nach dem Verdichter 13 erzielt wird. Das Kältemittel wird mittels des Verdichters 13 verdichtet und entsprechend der Position C nachfolgend im Kondensator 14 verflüssigt. Das Kältemittel durchläuft den internen Wärmeübertrager 19 auf der Hochdruckseite 17 und wird in diesem weiter abgekühlt, sodass die Position C' in Strömungsrichtung vor dem Expansionsorgan 15 erreicht wird. Mithilfe des internen Wärmeübertragers 19 kann der im Wärmeübertrager 12 nicht nutzbare Teil des Nassdampfgebietes (Positionen E bis E') zur weiteren Reduzierung einer Temperatur des Kältemittels (Positionen C' bis C) genutzt werden. An dem Expansionsorgan 15 erfolgt eine Entspannung des Kältemittels (Positionen C' bis D') und eine teilweise Verflüssigung in dem Wärmeübertrager 12 (Positionen D' bis E). Danach gelangt der Nassdampf des Kältemittels in den internen Wärmeübertrager 19 auf der Niederdruckseite 18, wobei hier eine Nachverdampfung des Kältemittels bis zur Taupunkttemperatur beziehungsweise dem Taupunkt des Kältemittels bei der Position E' erfolgt. Eine erste Teilstrecke 20 einer Verdampfungsstrecke 22 des Kältemittels verläuft daher durch den Wärmeübertrager 12, wobei eine zweite Teilstrecke 21 der Verdampfungsstrecke 22 durch den internen Wärmeübertrager 19 verläuft. Wesentlich ist hier, dass auf der Verdampfungsstrecke 22 ein Saugdruck des Verdichters 13 auf der Niederdruckseite 18 auch bei einer Änderung der Verdampfungstemperatur am Expansionsorgan 15 konstant gehalten wird.

Bei dem Kältemittel kann es sich um das Kältemittel 4 aus der zuvor angegebenen Tabelle handeln. Diese Kältemittel weisen nicht mehr als drei oder vier Komponenten und je nach deren Zusammensetzung einen hohen Temperaturglide von > 5 K auf, weshalb der interne Wärmeübertrager 19 zum sicheren Betrieb und zum Erreichen von Temperaturen < - 55 °C erforderlich ist. Wie zur **Fig. 1** beschrieben, wird mit diesen Kältemitteln eine am Wärmeübertrager 12 bzw. an dem hier nicht dargestellten Prüfraum nutzbare Kälteenergie zur Unterkühlung des flüssigen Kältemittels vor dem Expansionsorgan 15 im internen Wärmeübertrager 19 genutzt. Bei der Verwendung von Kältemitteln mit einem Temperaturglide von > 5 K ist dieser Effekt besonders ausgeprägt und damit eine Leistungssteigerung entsprechend hoch. Eine Regelung über eine aufwendige Sensorik ist nicht erforderlich. Aufgrund der Trägheit des Kühlkreislaufs 16 bzw. der Kühleinrichtung 10 sind jedoch dynamische Lastwechsel bzw. Temperaturwechsel nur mit Einschränkungen möglich. Darüber hinaus ist es möglich durch Aufheizen des Wärmeübertragers 12 in dem Prüfraum das dort befindliche Kältemittel zu verdampfen.

Die **Fig. 3** zeigt eine schematische Darstellung einer einfachsten Ausführungsform einer Kühleinrichtung 23, wobei die Kühleinrichtung 23 selbstregelnd ausgebildet ist. Die Kühleinrichtung umfasst einen Kühlkreislauf 24 mit einem Wärmeübertrager 25, einem Verdichter 26, einem Kondensator 27, einem Expansionsorgan 28 und einem internen Wärmeübertrager 29. Je nach einer Temperatur am Wärmeübertrager 25 entweicht nicht vollständiges verdampftes Kältemittel aus dem Wärmeübertrager 25, da die Temperatur am Wärmeübertrager 25 beziehungsweise in einem hier nicht gezeigten Prüfraum nicht mehr ausreicht, um einen Phasenwechsel zu erzeugen. In diesem Fall wird noch flüssiges Kältemittel im internen Wärmeübertrager 29 nachverdampft, da hier ein Temperaturunterschied immer größer als am Wärmeübertrager 25 sein muss. Sobald die Temperatur des flüssigen Kältemittels vor dem Expansionsorgan 28 durch den Wärmeaustausch im internen Wärmeübertrager 29 reduziert wurde, erhöht sich die Energiedichte und die damit erzielbare Temperaturdifferenz am Wärmeübertrager 25. Bei der Kühleinrichtung 23 ist eine aufwendige Regelung mit Sensoren etc. nicht erforderlich.

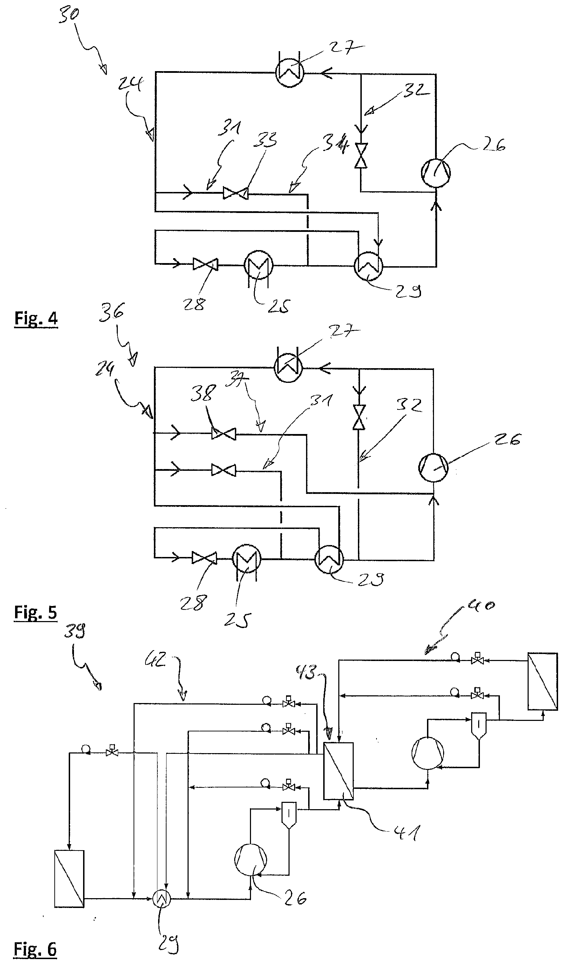

Die **Fig. 4** zeigt eine Kühleinrichtung 30, die im Unterschied zur Kühleinrichtung aus **Fig. 3** mit einem ersten Bypass 31 und einem zweiten Bypass 32 ausgebildet ist. In dem ersten Bypass 31 ist ein regelbares zweites Expansionsorgan 33 angeordnet, wobei der erste Bypass 31 als interne Ergänzungskühlung 34 ausgebildet ist. Der erste Bypass 31 ist unmittelbar in Strömungsrichtung nachfolgend dem Kondensator 27 vor dem internen Wärmetauscher 29 sowie in Strömungsrichtung nach dem Wärmeübertrager 25 und vor dem internen Wärmeübertrager 29 an den Kühlkreislauf 24 angeschlossen. Der erste Bypass 31 überbrückt somit das Expansionsorgan 28 mit dem Wärmeübertrager 25, wobei über das zweite Expansionsorgan 33 dem internen Wärmeübertrager 29 verdampfendes Kältemittel zugeführt werden kann. Ein Sauggasmassenstrom, der in den internen Wärmeübertrager 29 geleitet wird, kann mithilfe des ersten Bypass 31 bei hohen Sauggastemperaturen, welche durch den Wärmeübertrager 25 entstehen können, zusätzlich gekühlt werden. Somit kann sichergestellt werden, dass es zu keiner Verdampfung von Kältemittel vor dem Expansionsorgan kommen kann. Mittels des ersten Bypass 31 ist es daher möglich, auf wechselnde Lastfälle der Kühleinrichtung 30 zu reagieren. Der zweite Bypass 32 weist ein drittes Expansionsorgan 35 auf und ist in Strömungsrichtung nachfolgend dem Kondensator 27 und vor dem internen Wärmeübertrager 29 sowie nachfolgend dem internen Wärmeübertrager 29 und vor dem Verdichter 26 an den Kühlkreislauf 24 angeschlossen. Dadurch wird es möglich einen Sauggasmassenstrom vor dem Verdichter 26 über den zweiten Bypass 32 soweit zu reduzieren, dass unzulässig hohe Verdichtungsendtemperaturen vermieden werden. Die **Fig. 5** zeigt eine Kühleinrichtung 36, die im Unterschied zur Kühleinrichtung aus **Fig. 4** einen weiteren Bypass 37 aufweist. Der weitere Bypass 37 weist ein weiteres Expansionsorgan 38 auf und ist in Strömungsrichtung nachfolgend dem Kondensator 27 und vor dem internen Wärmeübertrager 29 sowie nachfolgend dem internen Wärmeübertrager 29 und vor dem Verdichter 26 an den Kühlkreislauf 24 angeschlossen.

Durch den ersten Bypass 31 wird es möglich auf wechselnde Lastfälle zu reagieren. Ein Sauggasmassenstrom kann so in den internen Wärmeübertrager 19 geleitet werden und mit einer Rückeinspritzung über den ersten Bypass 31 bei hohen Sauggastemperaturen, welche durch den Wärmeübertrager 25 entstehen können, zusätzlich gekühlt werden. Somit kann sichergestellt werden, dass es zu keiner Verdampfung vor dem Expansionsorgan 28 kommen kann. Weiter kann mit einer Rückeinspritzung über den weiteren Bypass 37 die Sauggastemperatur vor dem Verdichter 26 soweit reduziert werden, dass unzulässig hohe Verdichtungsendtemperaturen vermieden werden. Dadurch wird es möglich Kältemittel mit einem Temperaturglide > 5 K in Tieftemperaturanwendungen auch bei hochdynamischen Lastwechseln zu verwenden.

Die **Fig. 6** zeigt eine Kühleinrichtung 39, die im Unterschied zur Kühleinrichtung aus **Fig. 5** einen weiteren Kühlkreislauf 40 aufweist. Der weitere Kühlkreislauf 40 dient zur Kühlung eines Kondensators 41 eines Kühlkreislaufs 42. Der Kondensator 41 ist hier als ein Kaskaden-Wärmeübertrager 43 ausgebildet.

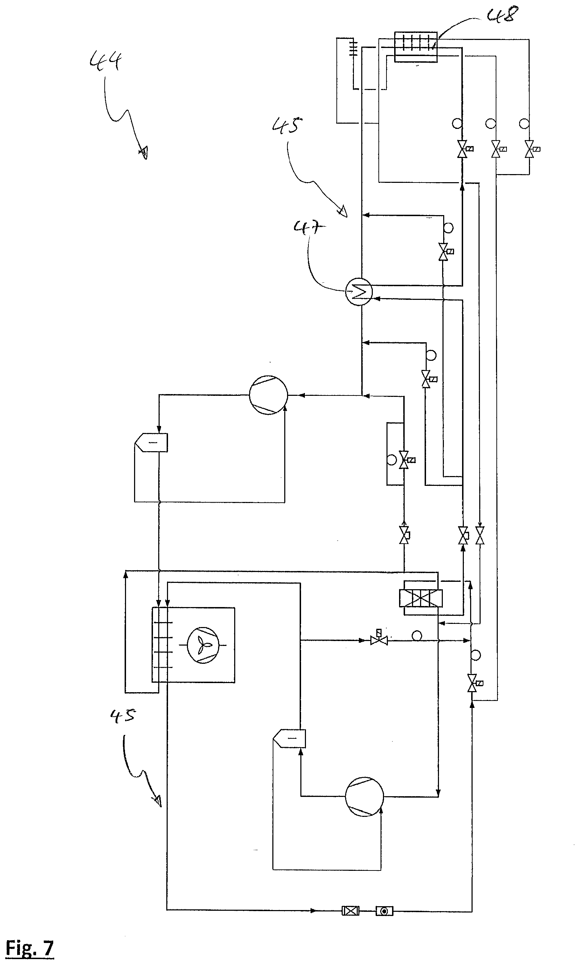

Die **Fig. 7** zeigt eine Kühleinrichtung 44 mit einem Kühlkreislauf 45 und einem weiteren Kühlkreislauf 46 und insbesondere einem internen Wärmeübertrager 47 in dem Kühlkreislauf 45. Ein Wärmeübertrager 48 ist hier in einem nicht dargestellten, temperaturisolierten Prüfraum einer Prüfkammer angeordnet.

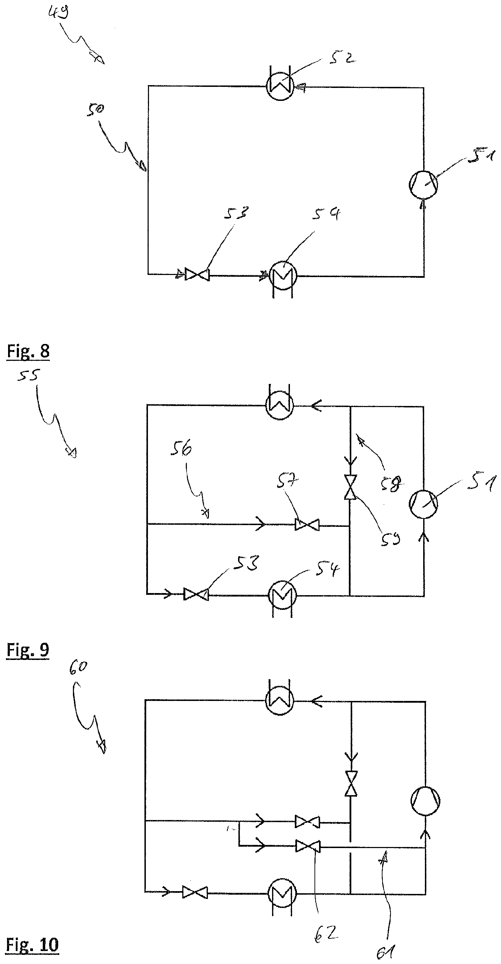

Die **Fig. 8** zeigt eine schematische Darstellung einer einfachsten Ausführungsform einer Kühleinrichtung 49 ohne einen internen Wärmeübertrager. Ein Kühlkreislauf 50 der Kühleinrichtung 49 ist mit einem Verdichter 51, einem Kondensator 52, einem Expansionsorgan 53 und einem Wärmeübertrager 54 in einem hier nicht näher dargestellten, temperaturisolierten Prüfraum einer Prüfkammer, ausgebildet.

Ein in dem Kühlkreislauf 50 zirkulierendes Kältemittel kann eines der Kältemittel 1, 2, 3 oder 4 aus der vorstehend angegebenen Tabelle sein. Diese Kältemittel weisen nicht mehr als drei oder vier Komponenten und je nach deren Zusammensetzung einen Temperaturglide von ≤ 5 K auf, weshalb kein interner Wärmeübertrager zum sicheren Betrieb und zum Erreichen von Temperaturen <55 °C erforderlich ist. Aufgrund der geringen Dichte des betreffenden Kältemittels muss bei tiefen Verdampfungstemperaturen der Verdichter 51 und die Verrohrung des Kühlkreislaufs 50 entsprechend angepasst werden.

Die **Fig. 9** zeigt eine Kühleinrichtung 55 bei der im Unterschied zu der Kühleinrichtung aus der **Fig. 8** ein erster Bypass 56 mit einem ersten Expansionsorgan 57 und ein zweiter Bypass 58 mit einem zweiten Expansionsorgan 59 vorgesehen ist. Der erste Bypass 56 und der zweite Bypass 58 sind, wie zur **Fig. 4** bereits beschrieben, entsprechend nutzbar. So kann eine Ansaugtemperatur des Verdichters 51 sowie ein Verdampfungsdruck mittels des ersten Expansionsorgans 57 und des zweiten Expansionsorgans 59 eingestellt oder geregelt werden.

Die **Fig. 10** zeigt eine Kühleinrichtung 60, die im Unterschied zur Kühleinrichtung aus Fig. 9 einen weiteren Bypass 61 mit einem weiteren Expansionsorgan 62 aufweist. Mit dem weiteren Expansionsorgan 62 kann die Sauggastemperatur und damit indirekt die Verdichtungsendtemperatur nochmals weiter abgesenkt werden.

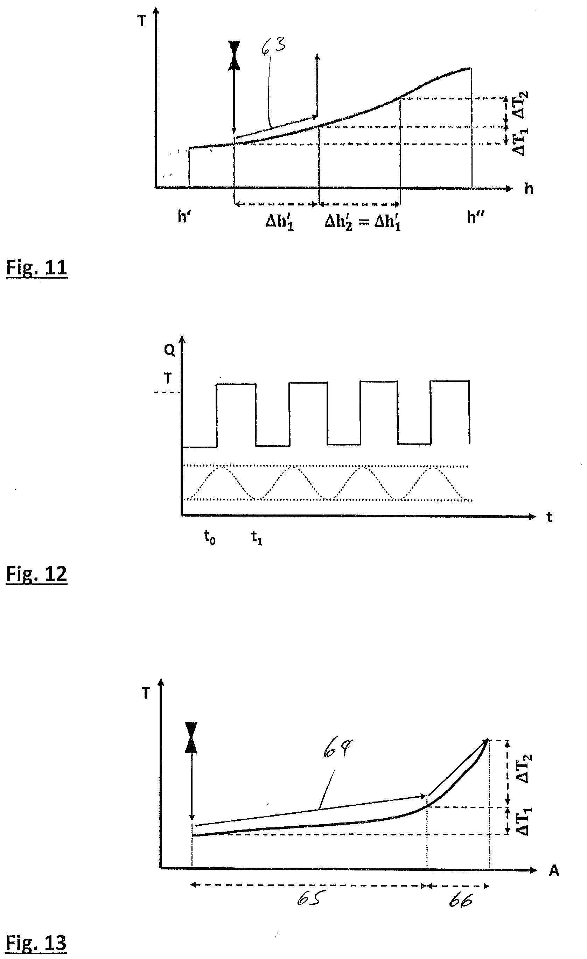

Weiter kann bei allen Kühleinrichtungen, die auf den in **Fig. 3** und **8** gezeigten Kühleinrichtungen basieren, vorteilhaft ein effektiver Temperaturglide des verwendeten Kältemittels reduziert werden. Wie aus dem Diagramm der **Fig. 11** hervorgeht ist ein Temperaturglide nicht linear, meist bei Kältemitteln mit einem Temperaturglide > 5 K. In der **Fig. 11** bezeichnet der Pfeil 63 einen durch einen Wärmeübertrager in einem Prüfraum verlaufenden Rohrabschnitt eines Kühlkreislaufs. Durch eine Reduktion des effektiven Temperaturglides im Wärmeübertrager kann eine Prüfraumtemperatur stabilisiert werden. Eine vollständige Verdampfung wird z. B. durch Ausnutzung einer Überhitzung des Kältemittels in der Saugleitung des Verdichters realisiert. Weiter kann durch das gezielte Nachheizen des Kältemittels oder eine Verwendung von Flüssigkeitsabscheidern eine bestmögliche Nutzung der im Kältemittel enthaltenen Energie erfolgen, um eine Anlageneffizienz zu steigern.

Die **Fig. 12** zeigt mit dem dargestellten Diagramm als eine weitere vorteilhafte Maßnahme ein getaktetes Öffnen und Schließen eines Expansionsorgans über einen Zeitabschnitt. Dadurch kann eine geringe Menge an Kältemitteln, welche in einem Wärmeübertrager verdampft, diesem zugeleitet werden, wenn lediglich eine vergleichsweise geringe Kälteleistung zur Aufrechterhaltung von einer Temperatur benötigt wird.

Das in der **Fig. 13** gezeigte Diagramm zeigt die Ausnutzung einer Überhitzung des Kältemittels in einer Saugleitung 66 eines Verdichters. Ein Pfeil 64 kennzeichnet hier einen Wärmeübertrager bzw. einen Verlauf eines Temperaturanstiegs bei einer Passage eines Kältemittels einer Wärmeübertragerfläche 65 vor der Saugleitung bzw. deren Fläche 66. Mittels eines elektronischen Expansionsorgans wird hierbei eine Temperatur nach dem Wärmeübertrager reduziert und gleichzeitig eine Überhitzung in der Saugleitung sichergestellt.

## Patentansprüche

1. Kältemittel für eine Kühleinrichtung (10, 23, 30, 36, 39, 44, 49, 55, 60) mit einem Kühlkreislauf (11, 24, 42, 50) mit zumindest einem Wärmeübertrager (12, 25, 48, 54), in dem das Kältemittel eine Phasenänderung durchläuft, wobei das Kältemittel ein Kältemittelgemisch aus einem Anteil Kohlendioxid (CO₂), einem Anteil Difluormethan (CH₂F₂) und einem Anteil 1,1,1,2-Tetrafluorethan (C₂H₂F₄) ist, wobei der Anteil 1,1,1,2-Tetrafluorethan 1 bis 29 Molprozent beträgt,
**dadurch gekennzeichnet,**
**dass** der Anteil Kohlendioxid an dem Kältemittelgemisch 54 bis 81 Molprozent, der Anteil Difluormethan 10 bis 20 Molprozent beträgt.

2. Kältemittel nach Anspruch 1,
**dadurch gekennzeichnet,**
**dass** ein Anteil Kohlendioxid an dem Kältemittelgemisch 59 bis 76 Molprozent, bevorzugt 64 bis 72 Molprozent, beträgt.

3. Kältemittel nach einem der Ansprüche 1 oder 2,
**dadurch gekennzeichnet,**
**dass** ein Anteil 1,1,1,2-Tetrafluorethan 5 bis 24 Molprozent, bevorzugt 9 bis 19 Molprozent, beträgt.

4. Kältemittel nach einem der vorangehenden Ansprüche,
**dadurch gekennzeichnet,**
**dass** eine weitere Komponente Pentafluorethan (C₂HF₅) und/oder Fluormethan (CH₃F) ist.

5. Kältemittel nach Anspruch 4,
**dadurch gekennzeichnet,**
**dass** ein Anteil Fluormethan 1 bis 15 Molprozent, bevorzugt 1 bis 10 Molprozent, besonders bevorzugt 1 bis 5 Molprozent, beträgt.

6. Kältemittel nach Anspruch 4 oder 5,
**dadurch gekennzeichnet,**
**dass** ein Anteil Pentafluorethan 1 bis 20 Molprozent, bevorzugt 1 bis 15 Molprozent, besonders bevorzugt 5 bis 10 Molprozent, beträgt.

7. Kältemittel nach einem der vorangehenden Ansprüche,
**dadurch gekennzeichnet,**
**dass** das Kältemittelgemisch aus drei Komponenten oder aus vier oder mehr Komponenten ausgebildet ist.

8. Kältemittel nach einem der Ansprüche 1 bis 7,
**dadurch gekennzeichnet,**
**dass** das Kältemittelgemisch als eine zusätzliche Komponente Dichlordifluorethan (C₂H₂F₂Cl₂), Ethan (C₂H₆), Ethen (C₂H₄), Fluorethen (C₂H₃F), Ethin (C₂H₂), Propan (C₃H₈), Propen (C₃H₆) und/oder Fluorethan (CH₂FCH₃) mit jeweils bis zu 30 Molprozent, bevorzugt bis zu 20 Molprozent, besonders bevorzugt bis zu 10 Molprozent, aufweist.

9. Kältemittel nach einem der vorangehenden Ansprüche,
**dadurch gekennzeichnet,**
**dass** das Kältemittel einen Temperaturglide von ≤ 5 K aufweist.

10. Kältemittel nach einem der vorangehenden Ansprüche,
**dadurch gekennzeichnet,**
**dass** das Kältemittel ein relatives CO2-Äquivalent, bezogen auf 100 Jahre, von < 1400 aufweist und/oder dass das Kältemittel nicht brennbar ist.

11. Prüfkammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -60 °C bis + 180 °C, bevorzugt -70 °C bis +180 °C, besonders bevorzugt -80 °C bis +180 °C, innerhalb des Prüfraums ausbildbar ist, wobei die Temperiervorrichtung eine Kühleinrichtung (10, 23, 30, 36, 39, 44, 49, 55, 60) mit einem Kühlkreislauf (11, 24, 42, 50) mit einem Kältemittel nach einem der vorangehenden Ansprüche, einem Wärmeübertrager (12, 25, 48, 54), einem Verdichter (13, 26, 51), einem Kondensator (14, 27, 41, 52) und einem Expansionsorgan (15, 28, 53) aufweist.

12. Verwendung eines Kältemittels bestehend aus einem Kältemittelgemisch aus einem Anteil Kohlendioxid (CO₂) von 54 bis 81 Molprozent, einem Anteil Difluormethan (CH₂F₂) von 10 bis 20 Molprozent und einem Anteil 1,1,1,2-Tetrafluorethan (C₂H₂F₄) von 1 bis 29 Molprozent , zur Konditionierung von Luft in einem gegenüber einer Umgebung verschließbaren und temperaturisolierten Prüfraum einer Prüfkammer zur Aufnahme von Prüfgut, wobei mittels einer Kühleinrichtung (10, 23, 30, 36, 39, 44, 49, 55, 60) einer Temperiervorrichtung der Prüfkammer, mit einem Kühlkreislauf (11, 24, 42, 50) mit dem Kältemittel, einem Wärmeübertrager (12, 25, 48, 54), einem Verdichter (13, 26, 51), einem Kondensator (14, 27, 41, 52) und einem Expansionsorgan (15, 28, 53), eine Temperatur in einem Temperaturbereich von -60 °C bis +180 °C, bevorzugt -70 °C bis +180 °C, besonders bevorzugt -80 °C bis +180 °C, innerhalb des Prüfraums ausgebildet wird.

13. Verwendung nach Anspruch 12,
**dadurch gekennzeichnet,**
**dass** mittels eines internen Wärmeübertragers (19, 29, 47) des Kühlkreislaufs (11, 24, 42), angeschlossen an einer Hochdruckseite (17) des Kühlkreislaufs in einer Strömungsrichtung vor dem Expansionsorgan (15, 28) und nachfolgend dem Kondensator (14, 27, 41), und an einer Niederdruckseite (18) des Kühlkreislaufs in einer Strömungsrichtung vor dem Verdichter (13, 26) und nachfolgend dem Wärmeübertrager (12, 25, 48), das Kältemittel der Hochdruckseite gekühlt wird, wobei die Kühlung des Kältemittels der Hochdruckseite mittels des internen Wärmeübertragers zur Absenkung einer Verdampfungstemperatur am Expansionsorgan genutzt wird.

14. Verwendung nach Anspruch 12 oder 13,
**dadurch gekennzeichnet,**
**dass** das Kältemittel nur teilweise in dem Wärmeübertrager (12, 25, 48, 54) verdampft wird.

15. Verwendung nach einem der Ansprüche 12 bis 14,
**dadurch gekennzeichnet,**
**dass** das Kältemittel mittels des Expansionsorgans (15, 28, 53) getaktet in einem Zeitintervall dosiert und in dem Wärmeübertrager (12, 25, 48, 54) verdampft wird.

## Claims

1. A refrigerant for a cooling device (10, 23, 30, 36, 39, 44, 49, 55, 60) having a cooling circuit (11, 24, 42, 50) comprising at least one heat exchanger (12, 25, 48, 54) in which the refrigerant undergoes a phase transition, the refrigerant being a refrigerant mixture composed of one part carbon dioxide (CO₂), one part difluoromethane (CH₂F₂), and one part 1,1,1,2-tetrafluoroethane (C₂H₂F₄), the part 1,1,1,2-tetrafluoroethane being (1 to 29) mole percent
**characterized in that**
the part carbon dioxide in the refrigerant mixture is (54 to 81) mole percent, the part difluoromethane being (10 to 20) mole percent.

2. The refrigerant according to claim 1,
**characterized in that**
a part carbon dioxide in the refrigerant mixture is (59 to 76) mole percent, particularly preferably (64 to 72) mole percent.

3. The refrigerant according to claim 1 or 2,
**characterized in that**
a part 1,1,1,2-tetrafluoroethane is (5 to 24) mole percent, preferably (9 to 19) mole percent.

4. The refrigerant according to any one of the preceding claims, **characterized in that**
another component is pentafluoroethane (C₂HF₅) and/or fluoromethane (CH₃F).

5. The refrigerant according to claim 4,
**characterized in that**
a part fluoromethane is (1 to 15) mole percent, preferably (1 to 10) mole percent, particularly preferably (1 to 5) mole percent.

6. The refrigerant according to claim 4 or 5,
**characterized in that**
a part pentafluoroethane is (1 to 20) mole percent, preferably (1 to 15) mole percent, particularly preferably (5 to 10) mole percent.

7. The refrigerant according to any one of the preceding claims, **characterized in that**
the refrigerant mixture is composed of three components or of four or more components.

8. The refrigerant according to claims 1 to 7,
**characterized in that**
the refrigerant mixture contains dichlorodifluoroethane (C₂H₂F₂Cl₂), ethane (C₂H₆), ethene (C₂H₄), fluoroethene (C₂H₃F), ethyne (C₂H₂), propane (C₃H₈), propene (C₃H₆) and/or fluoroethane (CH₂FCH₃) in an amount of up to 30 mole percent each, preferably up to 20 mole percent each, particularly preferably up to 10 mole percent each, as another component.

9. The refrigerant according to any one of the preceding claims, **characterized in that**
the refrigerant has a temperature glide of ≤ 5 K.

10. The refrigerant according to any one of the preceding claims, **characterized in that**
the refrigerant has a relative CO₂ equivalent of < 1400 over 100 years and/or that the refrigerant is nonflammable.

11. A test chamber for conditioning air, the test chamber comprising a test space which serves to receive test material and which can be sealed against an environment and is temperature-insulated, and a temperature control device for controlling the temperature of the test space, a temperature in a temperature range of -60 °C to +180 °C, preferably -70 °C to +180 °C, particularly preferably -80 °C to +180 °C, being establishable within the test space by means of the temperature control device, the temperature control device having a cooling device (10, 23, 30, 36, 39, 44, 49, 55, 60) comprising a cooling circuit (11, 24, 42, 50) with a refrigerant according to any one of the preceding claims, a heat exchanger (12, 25, 48, 54), a compressor (13, 26, 51), a condenser (14, 27, 41, 52) and an expansion element (15, 28, 53).

12. A use of a refrigerant consisting of a refrigerant mixture composed of a part carbon dioxide (CO₂) of (54 to 81) mole percent, a part difluoromethane (CH₂F₂) of (10 to 20) mole percent and a part 1,1,1,2-tetrafluoroethane (C₂H₂F₄) of (1 to 29) mole percent, for conditioning air in a test space of a test chamber, the test space serving to receive test material and being sealed against an environment and temperature-insulated, a cooling device (10, 23, 30, 36, 39, 44, 49, 55, 60) of a temperature control device of the test chamber, which comprises a cooling circuit (11, 24, 42, 50) with the refrigerant, a heat exchanger (12, 25, 48, 54), a compressor (13, 26, 51), a condenser (14, 27, 41, 52) and an expansion element (15, 28, 53), being used to establish a temperature in a temperature range of -60 °C to +180 °C, preferably -70 °C to +180 °C, particularly preferably -80 °C to +180 °C, within the test space.

13. The use according to claim 12,
**characterized in that**
the refrigerant of the high-pressure side is cooled by means of an internal heat exchanger (19, 29, 47) of the cooling circuit (11, 24, 42), connected to a high-pressure side (17) of the cooling circuit upstream of the expansion element (15, 28) and downstream of the condenser (14, 27, 41), and to a low-pressure side (18) of the cooling circuit upstream of the compressor (13, 26) and downstream of the heat exchanger (12, 25, 48), the cooling of the refrigerant of the high-pressure side being used to lower an evaporation temperature at the expansion element by means of the internal heat exchanger.

14. The use according to claim 12 or 13,
**characterized in that**
only part of the refrigerant is evaporated in the heat exchanger (12, 25, 48, 54).

15. The use according to any one of claims 12 to 14,
**characterized in that**
the refrigerant is metered and evaporated in the heat exchanger (12, 25, 48, 54) in a clocked manner during a time interval by means of the expansion element (15, 28, 53).

## Revendications

1. Réfrigérant pour un dispositif de refroidissement (10, 23, 30, 36, 39, 49, 55, 60) ayant un circuit de refroidissement (11, 24, 42, 50) comprenant au moins un échangeur de chaleur (12, 25, 48, 54) dans lequel le réfrigérant est soumis à une transition de phase, le réfrigérant étant un mélange de réfrigérant composé d'un volume de dioxyde de carbone (CO₂), d'un volume de diflourométhane (CH₂F₂), et d'un volume de 1,1,1,2-tétrafluoroéthane (C₂H₂F₄), le volume de 1,1,1,2-tétrafluoroéthane étant (1 à 29) pourcentage molaire
**caractérisé en ce que**
le volume de dioxyde de carbone dans le mélange de réfrigérant est (54 à 81) pourcentage molaire, le volume de diflourométhane étant (10 à 20) pourcentage molaire.

2. Réfrigérant selon la revendication 1,
**caractérisé en ce**
**qu'**un volume de dioxyde de carbone dans le mélange de réfrigérant est (59 à 76) pourcentage molaire, de préférence (64 à 72) pourcentage molaire.

3. Réfrigérant selon la revendication 1 ou la revendication 2, **caractérisé en ce**
**qu'**un volume de 1,1,1,2-tétrafluoroéthane est (5 à 24) pourcentage molaire, de préférence (9 à 19) pourcentage molaire.

4. Réfrigérant selon l'une quelconque des revendications précédentes, **caractérisé en ce**
**qu'**un autre composant est pentafluoroéthane (C₂HF₅) et/ou fluorométhane (CH₃F).

5. Réfrigérant selon la revendication 4,
**caractérisé en ce**
**qu'**un volume de fluorométhane est (1 à 15) pourcentage molaire, de préférence (1 à 10) pourcentage molaire, de préférence particulière (1 à 5) pourcentage molaire.

6. Réfrigérant selon la revendication 4 ou la revendication 5,
**caractérisé en ce**
**qu'**un volume de pentafluoroéthane est (1 à 20) pourcentage molaire, de préférence (1 à 15) pourcentage molaire, de préférence particulière (5 à 10) pourcentage molaire.

7. Réfrigérant selon l'une quelconque des revendications précédentes, **caractérisé en ce que**
le mélange de réfrigérant est composé de trois composants ou de quatre ou plus composants.

8. Réfrigérant selon la revendications 1 à 7,
**caractérisé en ce que**
le mélange de réfrigérant contient dichlorodifluoroéthane (C₂H₂F₂Cl₂), éthane (C₂H₆), éthène (C₂H₄), fluoroéthène (C₂H₃F), éthyne (C₂H₂), propane (C₃H₈), propène (C₃H₆) et/ou fluoroéthane (CH₂FCH₃) d'un montant allant jusqu'à 30 pourcentage molaire respectivement, de préférence allant jusqu'à 20 pourcentage molaire respectivement, de préférence particulière allant jusqu'à 10 pourcentage molaire respectivement, comme un autre composant.

9. Réfrigérant selon l'une quelconque des revendications précédentes, **caractérisé en ce que**
le réfrigérant a un glissement de température de ≤ 5 K.

10. Réfrigérant selon l'une quelconque des revendications précédentes, **caractérisé en ce que**
le réfrigérant a un équivalent CO₂ relatif de < 1400 sur 100 ans et/ou en que le réfrigérant est ininflammable.

11. Chambre d'essai pour le conditionnement de l'air, la chambre d'essai comprenant un espace d'essai qui sert à recevoir du matériau d'essai et qui peut être fermé contre un environnement et est isolé de température et un dispositif de contrôle de température pour le contrôle de la température de l'espace d'essai, une température dans une plage de température de -60 °C à +180 °C, de préférence -70 °C à +180 °C, de préférence particulière -80 °C à +180 °C, pouvant être établie dans l'espace d'essai au moyen du dispositif de contrôle de température, le dispositif de contrôle de température ayant un dispositif de refroidissement (10, 23, 30, 36, 39, 44, 49, 55, 60) comprenant un circuit de refroidissement (11, 24, 42, 50) avec un réfrigérant selon l'une quelconque des revendications précédentes, un échangeur de chaleur (12, 25, 48, 54), un compresseur (13, 26, 51), un condenseur (14, 27, 41, 52) et un élément d'expansion (15, 28, 53).

12. Utilisation d'un réfrigérant consistant d'un mélange de réfrigérant composé d'un volume de dioxyde de carbone (CO₂) de (54 à 81) pourcentage molaire, d'un volume de diflourométhane (CH₂F₂) de (10 à 20) pourcentage molaire et d'un volume de 1,1,1,2-tétrafluoroéthane (C₂H₂F₄) de (1 à 29) pourcentage molaire, pour le conditionnement de l'air dans un espace d'essai d'une chambre d'essai, l'espace d'essai servant à recevoir du matériau d'essai et étant fermé contre un environnement et isolé de température, un dispositif de refroidissement (10, 23, 30, 36, 39, 44, 49, 55, 60) d'un dispositif de contrôle de température de la chambre d'essai, qui comprend un circuit de refroidissement (11, 24, 42, 50) avec le réfrigérant, un échangeur de chaleur (12, 25, 48, 54), un compresseur (13, 26, 51), un condenseur (14, 27, 41, 52) et un élément d'expansion (15, 28, 53), étant utilisé à établir une température dans une plage de température de -60 °C à +180 °C, de préférence -70 °C à +180 °C, de préférence particulière -80 °C à +180 °C, dans l'espace d'essai.

13. Utilisation selon la revendication 12,
**caractérisé en ce que**
le réfrigérant du côté à haute pression est refroidit au moyen d'un échangeur de chaleur (19, 29, 47) interne du circuit de refroidissement (11, 24, 42), relié à un côté à haute pression (17) du circuit de refroidissement en aval de l'élément d'expansion (15, 28) et en amont du condenseur (14, 27, 41), et à un côté à baisse pression (18) du circuit de refroidissement en aval du compresseur (13, 26) et en amont de l'échangeur de chaleur (12, 25, 48), le refroidissement du réfrigérant du côté à haute pression étant utilisé à abaisser une température d'évaporation à l'élément d'expansion au moyen de l'échangeur de chaleur interne.

14. Utilisation selon la revendication 12 ou la revendication 13, **caractérisé en ce que**
seulement un volume du réfrigérant est évaporé dans l'échangeur de chaleur (12, 25, 48, 54).

15. Utilisation selon l'une quelconque des revendications 12 à 14, **caractérisé en ce que**
le réfrigérant est dosé et évaporé dans l'échangeur de chaleur (12, 25, 48, 54) de manière cadencée pendant un intervalle temporel au moyen de l'élément d'expansion (15, 28, 53).
